# EUROPEAN PATENT APPLICATION

(11) **EP 0 964 485 A1**
(43) Date of publication of application: **15.12.1999**
(21) Application number: 99110710.3
(22) Date of filing: 04.06.1999
(51) Int. Cl.: H01R 43/048, G01B 5/06

(54) **Crimp height measuring device**

(30) Priority: 11.06.1998 EP 98401422
(71) Applicant: THE WHITAKER CORPORATION, Wilmington, Delaware 19808 (US)
(72) Inventor: Boullu, Maurice, 13510 Eguilles (FR); Soriano, Louis, 13400 Aubagne (FR)
(74) Representative: Heinz-Schäfer, Marion

(57) **Abstract**

A crimp height measuring apparatus (2) comprises a movable measuring ram (18) and an anvil (16) between which a crimp section (4) is clamped for height measurement thereof. The ram (18) is provided with a pair of centering jaws (22) pivotally spring mounted on the ram. The centering jaws ensure that the crimp section (4) is accurately positioned with respect to a pointed measuring probe (34) of the ram. An accurate and reliable crimp height measuring apparatus is thus provided whereby burrs (12) of the crimp section do not interfere with the crimp height measurement.

## Description

This invention relates to a device or apparatus for measuring the height of a crimped connection, in particular the crimp connection of a conductor to an electrical terminal.

In US 5,275,032 an apparatus for controlling the crimp height of crimped electrical connections is disclosed. The purpose of measuring the height of a crimped connection is to determine the quality of the crimped connection and to detect whether the crimping tools are damaged or have excessive wear or whether the various crimping, parameters and tooling are correctly set. Measuring the crimp height is an important quality control measure whereby it is desirable to measure very small deviations of crimp height (hundreds of millimetres). The crimp height measuring apparatus disclosed in US 5,275,032, comprises a stationary anvil against which the crimped connection rests and a movable part that presses the crimped connection against the anvil, whereby the distance between the movable part and the anvil indicates the crimp height. In lead making machines, various size wires and terminals may be processed. The crimp connections to be measured by the crimp height measuring apparatus thus vary, for example certain crimp connections have larger burrs than others.

The inventor of the invention described hereinafter, has realised that the burrs of certain crimp connections may interfere with the accuracy of crimp height determination.

It is an object of this invention to provide a more accurate and reliable crimp height measuring device.

Objects of this invention have been achieved by providing the crimp height measuring device according to claim 1. Disclosed herein is a crimp height measuring device comprising an anvil and a measuring ram movable relative to the anvil such that a crimp connection can be sandwiched therebetween for determining the crimp height thereof, wherein the device further comprises centering jaws that engage and locate the crimp connection on the anvil with respect to a measuring head at the ram. The ram measuring head may be provided with a measuring surface against which the crimp connection abuts, that is narrower than width of the crimp connection determined by the distance between opposed sides of the crimp connection. Burrs of the crimp connection, that are extensions of the sides of the crimp connection, will therefore not interfere with the crimp height measurement. The centering jaws ensure that the crimp connection is accurately centred with respect to the measuring surface. The centering jaws may be spring loaded such that they resiliently clamp the crimp connection therebetween. The centering jaws may be provided as a pair of symmetrical pivotally mounted jaws that are linked together to ensure that the opening of the jaws is symmetrical. The jaws may be coupled together for example by interengaging gear teeth or alternatively with a bar linkage mechanism. The centering jaws may be mounted on the movable measuring ram, and comprise a funnel shaped entry portion that locates and guides the crimp connection therebetween as the jaws are biased over the crimp connection.

Further advantageous aspects of this invention will be described in the claims, or will be apparent from the following description and drawings.

An embodiment of this invention will now be described by way of example with reference to the figures in which;
Figure 1 is a front partial cross sectional plan view of a crimp height measuring apparatus according to this invention;
Figure 2 is a front cross sectional view of the measuring apparatus of figure 1, showing in particular the crimp height measurement sensors;
Figure 3 is a side plan view of the apparatus of figure 1 and 2;
Figure 4 is a partial detailed front plan view of a crimp connection being measured by the apparatus according to this invention.

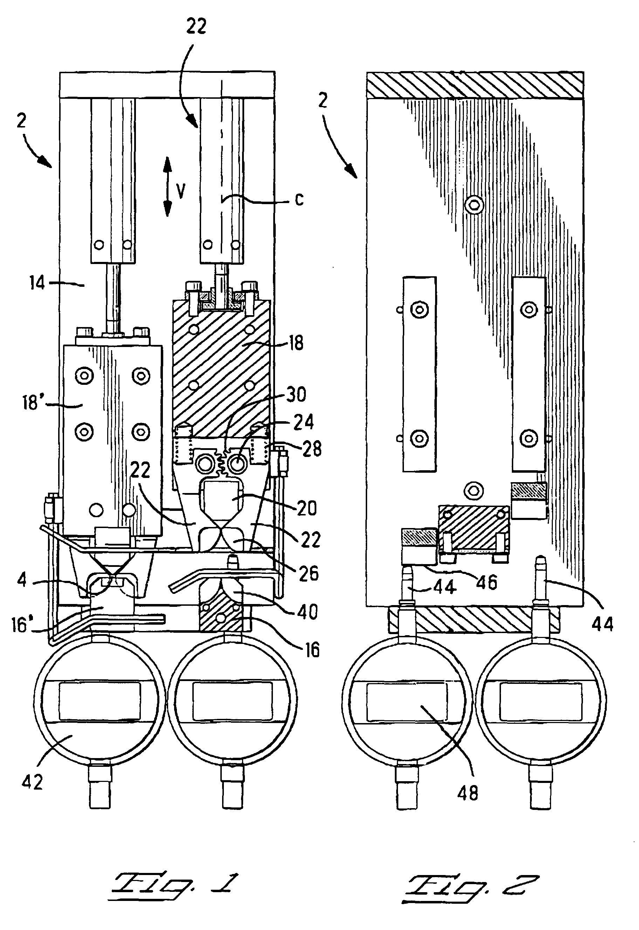

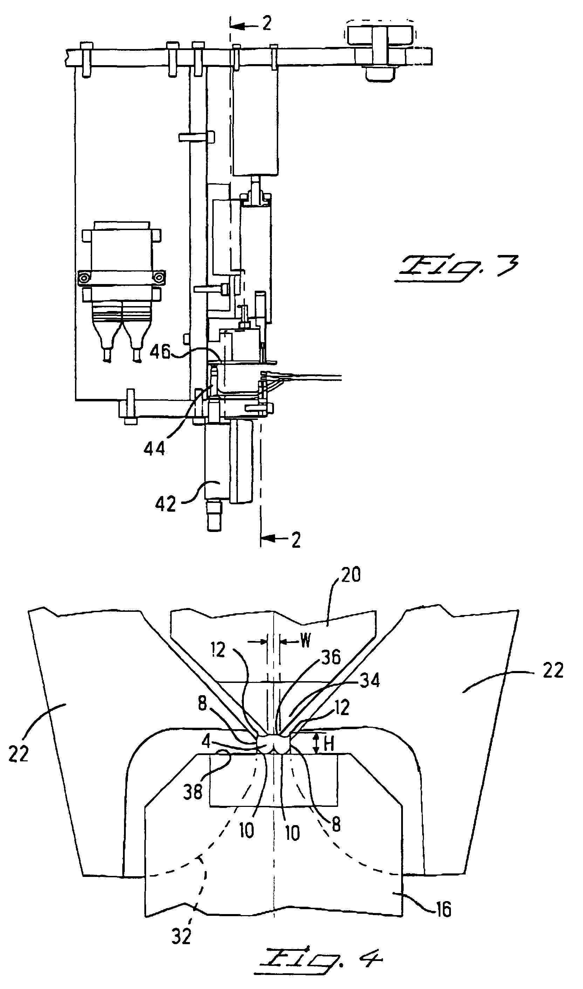

Referring to the figures, a crimp height measuring apparatus or device 2 is for measuring the height H of a crimp connection 4 (see figures 1 and 4). The crimp connection 4 shown in cross section in figure 4, illustrates the cross sectional profile of a conventional crimp connection formed from the deformation of a crimping barrel of an electrical terminal over conducting strands of an electrical wire. The crimp connection 4 typically comprises a rounded base surface 6, opposed side surfaces 8 and a pair of curved top surface 10 formed by the folding together of opposed arms of the terminal crimping barrel ("top" and "base" refer to the usual orientation of a crimping section, which is shown upside down in figure 4). The height H between the center of the base surface 6 and top of the top surfaces 10 is determinant for controlling the crimp quality. As illustrated in figure 4, the crimp connection 4 may further comprise burrs 12 projecting towards the bottom at the position of the sides 8. Depending on the diameter of the electrical wire to be crimped and the crimping barrel dimensions, in certain circumstances the burrs 12 may extend beyond the outer most point of the base surface 6. In conventional crimp height measurement apparatus, the crimp connection is not centred by any particular means and the height is merely determined by clamping the crimp connection between two major surfaces that extend across the crimp connection beyond the sides 8. In the event that the burrs 12 extend below the base surface 6, an error in reading the crimp height between the base surface 6 and top surfaces 10 will occur.

The apparatus 2 comprises a support or frame 14 onto which is fixedly mounted an anvil 16 and moveably mounted a measuring ram assembly 18 having a measuring ram head 20. It is also possible to have the anvil move and fix the ram, as long as there is relative movement between the ram and anvil for clamping the crimp connection between the anvil 16 and ram measuring head 20. The ram 18 may be moved by various conventional means, in this embodiment a computer controlled piston actuator 22 is provided for moving the ram in the vertical direction V.

The apparatus further comprises a pair of centering jaws 22 that are mounted pivotally about a pivot axis 24 to the ram 18 and extend therefrom to clamping ends 26, the pair of clamping jaws 22 being resiliently biased by springs 28 towards each other at the clamping ends 26. The opening and closing movement of the clamping jaw ends 26 is symmetrical about a vertical centre line C due to interengagement of gear teeth 30 of the clamping jaws at the pivot end 24. The pair of clamping jaws may be interconnected by linkage bars instead of gear teeth. The clamping end 26 of the jaws 22 comprises an inwardly tapered guide surface 32 for guiding and locating the crimp connection 4 therebetween and resilient biasing apart of the jaws 22 when the ram 18 is descended from the upper position to the measuring position shown in figure 4.

As shown in figure 1, the apparatus 2 may be provided with two measuring rams 18, 18' and anvils 16, 16' whereby figure 1 shows the right hand ram in the upper position and the left hand ram in the lower or measuring position where the crimp height of a crimp connection 4 is being measured.

Instead of having a pair of jaws that open symmetrically, it would also be possible to provide a single centering jaw that biases the terminal against a fixed referenced surface that takes into account the width of the terminal.

As best seen in figure 4, the ram head 20 has a pointed tip 34 having a measuring surface 36 with a width W less than the width of terminals to be measured (i.e. the distance between the terminal sides 8). This ensures that the measuring surface 36 does not interfere with any burrs 12 of the terminal and the true height H of the terminal is measured. As there are no burrs on the terminal top side 10, the anvil 16 may be provided with a measuring surface 38 of greater width than the terminal. As the cross section of the anvil 16 in figure 1 shows, at the position of the centering jaws 22 the anvil is provided with slots 40 to allow passage of the centering jaws into the measuring position without interfering with the anvil.

The determination of the crimp height H may be effected by a displacement sensor 42 having a sensing probe 44 against which a reference surface 46 fixed to the ram abuts, as best seen in figure 2 where the left hand ram is in the measuring position. The sensor 42 may be provided with a screen 48 for displaying the measurement results, which may also be fed to the data processing electronics of the harness making machine.

Crimp height measurement is thus effected by first positioning a terminal 4 above the anvil measuring surface 38 in alignment substantially with the ram center axis C. In many harness making machines the terminal is transported from station to station by gripping the lead wire on which the terminal is crimped. As the lead wire is supple, there is a certain in-determination in the positioning of the terminal, which is corrected when the ram is descended from the terminal receiving position to the measuring position. The centering jaws 22 bias apart resiliently and symmetrically in view interengaging teeth 30 thereby centering the terminal by engagement of the jaws with the terminal sides 8.

As the terminals are accurately centered, the ram head 30 can be provided with a pointed tip 34 with a small flat measuring surface 36 of width W less than the width of the terminal crimp section between the sides 8, thereby avoiding overlapping of the measuring surface with the burrs 12. As the crimp section top surfaces 10 and center bottom surface 6 accurately define the crimping height, a reliable measurement thereof is ensured.

## Claims

1. A crimp height measuring device or apparatus (2) comprising an anvil (16) and a measuring ram (18) movable relative to the anvil (16) in a measuring direction (V) such that a crimp connection (4) can be sandwiched between a measuring surface (36) of the ram and a measuring surface (38) of the anvil for determining the crimp height of the crimp connection, wherein the device (2) further comprises centering jaws (22) that engage and locate the crimp connection (4) on the anvil (16) with respect to a center axis (C) that is parallel to the measuring direction (V).

2. The apparatus of claim 1 wherein the centering jaws (22) are pivotally mounted on the ram (18), each about an axis (24).

3. The apparatus of claim 2 wherein the centering jaws are resiliently biased towards each other at clamping ends (26) thereof by springs (28).

4. The apparatus of any one of the preceding claims wherein the centering jaws (22) have interengaging portions that cooperate to ensure substantially symmetrical movement of the centering jaws (22) about the center axis (C).

5. The apparatus of the preceding claim wherein the interengaging portions are in the form of gear teeth (30), each centering jaw having teeth arranged about a respective pivot axis (24)

6. The apparatus of any one of the preceding claims wherein the centering jaws (22) have a tapered guide surface (32) at a clamping end (26) forming a funnel shaped guide and locating surface for insertion and positioning of the crimp section (4) between the centering jaws.

7. The apparatus of any one of the preceding claims wherein the anvil (16) is provided with slots (40) below the measuring surface (38) of the anvil for receiving a clamping end (26) of the centering jaws when the ram is moved to the measuring position.
